# EUROPEAN PATENT APPLICATION

(11) **EP 3 549 885 A1**
(43) Date of publication of application: **09.10.2019**
(21) Application number: 17876432.0
(22) Date of filing: 30.11.2017
(51) Int. Cl.: B65D 90/04, C08K 3/04, C08L 27/12, H01B 1/04, H01B 5/16

(54) **MEMBER CONTACTING CHEMICAL LIQUID FOR SEMICONDUCTOR PRODUCT MANUFACTURE WHEN CHEMICAL LIQUID IS CAUSED TO FLOW**

(30) Priority: 01.12.2016 JP 2016234545; 06.11.2017 JP 2017214253
(71) Applicant: Sun Fluoro System Co., Ltd., Settsu-shi, Osaka 566-0052 (JP)
(72) Inventor: YANO Shinichi, Settsu-shi Osaka 566-0052 (JP); KAWAGUCHI Mitsuyoshi, Settsu-shi Osaka 566-0052 (JP); KATSUBE Toshiyuki, Settsu-shi Osaka 566-0052 (JP)
(74) Representative: Hansen, Norbert
(86) International application number: PCT/JP2017/043117
(87) International publication number: WO 2018/101423

(57) **Abstract**

The purpose of the present invention is to provide: a member which contacts liquid, gas, or powder insulating material when the insulating material is caused to flow and which is less susceptible to dielectric breakdown; a distribution mechanism, tank, and device using a sheet for lining the member or the inside of a pipe or a tank containing the member; a storage tank wherein a portion of the surface of a liquid-contact portion thereof comprises the member; a storage method for storing organic solvent, ultrapure water, and hydrogen peroxide water, particularly organic solvent, ultrapure water, and hydrogen peroxide water used in semiconductor product manufacture, using the storage tanks; and a method for manufacturing a semiconductor product using the organic solvent stored in the storage tank. A resin composition containing a matrix resin and an electro-conductive material dispersed in the matrix resin is used for the member which contacts liquid, gas, or powder insulating material when the insulating material is caused to flow.

## Description

### TECHNICAL FIELD

The present invention relates to a member which comes into contact with an insulating material when the insulating material is caused to flow; a distribution mechanism, a tank and an apparatus in which a sheet for lining the member or an inside of a pipe or a tank comprising the member is used; a storage tank in which a portion of a surface of a wetting portion thereof comprises the aforementioned member; a method of storing an organic solvent, ultrapure water or an aqueous hydrogen peroxide solution, particularly an organic solvent, ultrapure water or an aqueous hydrogen peroxide solution for manufacturing a semiconductor, by using the storage tank; and a method of manufacturing a semiconductor product using an organic solvent, ultrapure water or an aqueous hydrogen peroxide solution stored in the aforementioned storage tank.

### BACKGROUND ART

Conventionally, a flowable insulating material represented by an organic solvent, ultrapure water or an aqueous hydrogen peroxide solution is stored in a storage tank or the like, and then supplied to various apparatuses such as a chemical reaction apparatus, a cleaning apparatus, a filling and packaging facility or the like via a pipe using air, gas, a pump or the like.

In such an apparatus, a lining is often applied to a portion of the apparatus which comes into contact with a flowable insulating material for the purpose of preventing corrosion or wear of the apparatus and elution of impurities into the flowable material, or adhesion of impurities to the flowable material.

In particular, the use of a chemical liquid having extremely high purity is required in the manufacture of semiconductor devices. For this reason, in many cases, a tank or a pipe storing a chemical liquid for manufacturing semiconductor devices is lined with a resin material having excellent durability to chemicals, organic solvents or the like in order to suppress elution of impurities such as metals.

As a tank for storing a chemical liquid used for manufacturing a semiconductor device, for example, Patent Document 1 proposes that a lining sheet material containing a fluororesin is provided on the wetting side on the inner surface of a metal vessel, and a general-purpose resin lining material is provided on the back side of the lining sheet material to perform two-layer lining. Patent Document 1 proposes using a carbon cloth by heat welding to a lining sheet containing a fluororesin.

Patent Document 1: Japanese Unexamined Patent Application, Publication No. H08-80996

### DISCLOSURE OF THE INVENTION

### Problems to be Solved by the Invention

In the lining material disclosed in Patent Document 1, a general-purpose resin lining material is provided so that even when a pinhole or a crack occurs in a lining sheet material containing a fluororesin, metal is not eluted from a metal can body into a chemical liquid. However, in a tank lined as disclosed in Patent Document 1, if a pinhole or a crack occurs in a lining sheet material containing a fluororesin, there is a high possibility that the elution of metal into a chemical liquid is prevented in the short term, but the elution of metal occurs over the long term. This is because the resistance of general-purpose resins to chemical liquids is generally low. The chemical liquid penetrates into the lining sheet material containing the general-purpose resin from the place where the pinhole or the crack occurs, and as a result, the lining sheet material containing the general-purpose resin is damaged by the chemical liquid.

For this reason, it is required to reduce the occurrence of fundamental pinholes and cracks in the lining sheet material. Here, when the chemical liquid is a flowable insulating material such as an organic solvent, ultrapure water or an aqueous hydrogen peroxide solution, electrostatic breakdown due to accumulation of static electricity caused by contact between the lining material and the flowable insulating material can be attributed as the main cause of the occurrence of pinholes or cracks. The electrostatic breakdown of the lining material is problematic since it is not only capable of causing elution of impurities into a chemical liquid or the like, but is also capable of causing exfoliation of the lining material when the degree of breakdown is severe.

The lining material is also required to not easily generate foreign matter in the flowable material with which the lining contacts.

The present invention has been made in light of the above-mentioned problems. The object of the invention is to provide: a member which comes into contact with a liquid, gaseous or granular insulating material when the insulating material is caused to flow and which does not easily cause dielectric breakdown or does not easily generate foreign matter in the insulating material; a distribution mechanism, a tank and an apparatus in which a sheet for lining the member or an inside of a pipe or a tank comprising the member is used; a storage tank in which a portion of the surface of a wetting portion thereof comprises the aforementioned member; a method of storing an organic solvent, ultrapure water or an aqueous hydrogen peroxide solution, particularly an organic solvent, ultrapure water or an aqueous hydrogen peroxide solution for manufacturing a semiconductor, by using the storage tank; and a method of manufacturing a semiconductor product using an organic solvent, ultrapure water or an aqueous hydrogen peroxide solution stored in the aforementioned storage tank. Means for Solving the Problems

The inventors of the present invention have found that the above-mentioned problems can be solved by using a resin composition containing a matrix resin and an electro-conductive material dispersed in the matrix resin as a member which comes into contact with a liquid, gaseous or granular insulating material when the insulating material is caused to flow, and thus the present invention has been completed. Specifically, the present invention provides the following.
(1) A member which comes into contact with a liquid, gaseous or granular insulating material when the insulating material is caused to flow, wherein the member comprises a resin composition comprising a matrix resin and an electro-conductive material dispersed in the matrix resin.
(2) The member according to (1), wherein the electro-conductive material is a material containing no metal or no metal compound.
(3) The member according to (1) or (2), wherein the electro-conductive material comprises a nanocarbon material.
(4) The member according to (3), wherein the nanocarbon material is a carbon nanotube.
(5) The member according to any one of (1) to (4), wherein the tensile strength of the matrix resin is 12.5 MPa or more and the tensile elongation of the matrix resin is 200% or more.
(6) The member according to any one of (1) to (5), wherein the matrix resin is a fluororesin.
(7) The member according to (6), wherein the electro-conductive material is a carbon nanotube.
(8) The member according to any one of (1) to (7), wherein the content of the electro-conductive material in the resin composition is 20% by mass or less.
(9) A distribution mechanism for distributing a liquid, gaseous or granular insulating material, wherein at least a part of a surface, which is a surface of the distribution mechanism and which comes into contact with the insulating material, comprises the member according to any one of (1) to (8) .
(10) A tank for storing or stirring a liquid, gaseous or granular insulating material, wherein at least a part of a surface, which is a surface of the tank and which comes into contact with the insulating material, comprises the member according to any one of (1) to (8).
(11) An apparatus comprising at least one of the distribution mechanism according to (9) and the tank according to (10).
(12) A sheet for lining an inside of a pipe or a tank comprising the member according to any one of (1) to (8).
(13) A pipe or a tank lined with the sheet according to (12) .
(14) A method of distributing, stirring or storing a liquid, gaseous or granular insulating material, wherein the pipe or the tank according to (13) is used.
(15) A storage tank for storing an insulating liquid, comprising a tank body, a pit and a dripping tube inserted into the tank body,
   wherein the pit is disposed inside the tank body,
   the dripping tube is disposed such that one end of the dripping tube is positioned proximate to an opening of the pit, and
   at least a part of a surface, which is a surface of at least one selected from the tank body, the pit and the dripping tube, and which comes into contact with the insulating liquid, comprises the member according to any one of (1) to (8).
(16) The storage tank according to (15), wherein a surface, which is a surface of the pit and which comes into contact with the insulating liquid comprises the member according to any one of (1) to (8).
(17) The storage tank according to (15) or (16), wherein the member is the member according to (7).
(18) The storage tank according to any one of (15) to (17), wherein the insulating liquid is an organic solvent.
(19) The storage tank according to any one of (15) to (17), wherein the insulating liquid is an organic solvent for manufacturing a semiconductor product.
(20) The method for storing an organic solvent, wherein the organic solvent is stored in the storage tank according to (18) .
(21) A method of storing an organic solvent for manufacturing a semiconductor product, wherein the organic solvent for manufacturing a semiconductor product is stored in the storage tank according to (19).
(22) A method of manufacturing a semiconductor product using the organic solvent stored by the method according to (21) .

### Effects of the Invention

The present invention can provide: a member which comes into contact with a liquid, gaseous or granular insulating material, when the insulating material is caused to flow, and which does not easily cause dielectric breakdown and does not easily generate foreign matter in the insulating material; a distribution mechanism, a tank and an apparatus in which a sheet for lining the member or an inside of a pipe or a tank comprising the member is used; a storage tank in which a part of a surface of a wetting portion of the storage tank comprises the aforementioned member; a method of storing an organic solvent, ultrapure water or an aqueous hydrogen peroxide solution, particularly an organic solvent, ultrapure water or an aqueous hydrogen peroxide solution for manufacturing a semiconductor by using the storage tank; and a method of manufacturing a semiconductor product using an organic solvent, ultrapure water or an aqueous hydrogen peroxide solution stored in the aforementioned storage tank.

### BRIEF DESCRIPTION OF THE DRAWINGS

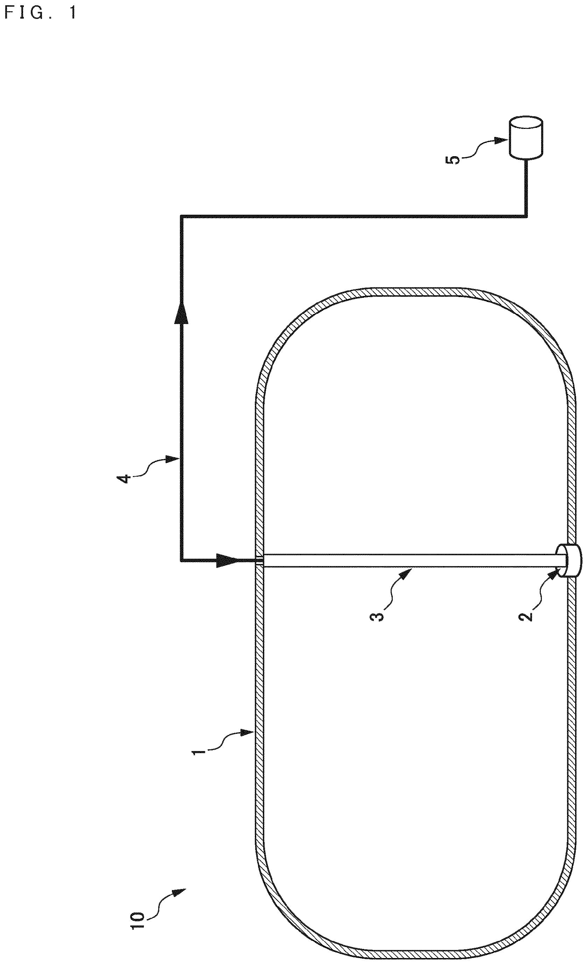

Fig. 1 is a schematic diagram showing a cross section of a storage tank for storing an insulating liquid.

### PREFERRED MODE FOR CARRYING OUT THE INVENTION

### <<Members>>

The member described below is a member that comes into contact with a liquid, gaseous or granular insulating material when the insulating material is caused to flow. With regard to such a member, static electricity is generated when the member comes into contact with a flowing insulating material and dielectric breakdown due to accumulation of the generated static electricity easily occurs. Occurrence of dielectric breakdown due to contact with a flowing insulating material is, however, suppressed in a member containing a predetermined component, which is described below.

The member comprises a resin composition comprising a matrix resin and an electro-conductive material dispersed in the matrix resin.

### <Insulating Material>

As described above, the member is a member that comes into contact with a liquid, gaseous or granular insulating material when the insulating material is caused to flow. Here, the insulating material in the form of liquid or granular material is not particularly limited as long as it is generally recognized as an insulating material. Typically, the insulating liquid or granular material preferably comprises a substance having a volume resistance of 10⁷ Ω·cm or more and more preferably, 10¹⁰ Ω·cm or more. The gas is typically an insulator. This is because, in the case of a gas, molecules constituting the gas do not exist close to each other, so that it is difficult for free electrons or the like in the gas to move.

Note that the insulating material may comprise two or more selected from a liquid, a gas and a granular material. For example, the insulating liquid may comprise bubbles of an insulating gas, the insulating liquid may comprise an insulating granular material and the insulating gas may comprise droplets of an insulating liquid or an insulating fine powder.

Examples of the insulating liquid typically include ultrapure water, an aqueous hydrogen peroxide solution, an organic solvent, a silicone oil and the like. Examples of the insulating gas include dry air, hydrogen, nitrogen, oxygen, carbon dioxide, helium, ethylene, acetylene and various gases used as fuels. Examples of the granular insulating material include powders of organic chemical products, resin pellets, glass fibers, glass powders, ceramic powders, cereals, cereal powders such as wheat flour, animal feed, polysaccharides such as starch, low molecular weight sugars such as sucrose and woody powders. The insulating material is not particularly limited to the examples disclosed above.

The insulating material is particularly preferably a chemical liquid for the manufacture of semiconductor products. Such a chemical liquid is typically ultrapure water, an aqueous hydrogen peroxide solution or an organic solvent. Specific examples of organic solvents used in the manufacture of semiconductor products are described below in detail.

### <Electro-conductive Materials>

The electro-conductive material is not particularly limited as long as it is generally recognized as having electroconductivity. The electro-conductive material may be an organic material or an inorganic material. Dispersing an electro-conductive material in the matrix resin provides a resin composition which is capable of producing a member having a low volume resistance. Typically, the volume resistance of the member comprising the resin composition comprising the matrix resin and the electro-conductive material is preferably 10⁷ Ω·cm or less, more preferably 10⁶ Ω·cm or less, still more preferably 10⁴ Ω·cm or less, still more preferably 10³ Ω·cm or less, and particularly preferably 10² Ω·cm or less. The lower limit of the volume resistance of the member is not particularly limited, but is, for example, greater than 0 Ω·cm and may be greater than 10 Ω·cm.

As the inorganic material, for example, metal powders or metal fibers can be used. As the metal powder, a metal fine powder having an average particle diameter of 100 µm or less, preferably an average particle diameter of 50 µm or less, which is produced by an atomization method, for example, is preferable. As the metal fiber, a metal nanofiber material typified by silver nanowires or the like is preferable. The fiber diameter of the metal nanowire is, for example, preferably 200 nm or less, and more preferably 10 to 100 nm. The fiber length of the metal nanowire is preferably 5 to 100 µm, more preferably 10 to 50 µm.

However, depending on the type of the insulating material to be in contact with the member, it is necessary to avoid elution of metal into the insulating material or adhesion of metal to the insulating material, in some cases. Typically, when the insulating material is an organic solvent, ultrapure water or an aqueous hydrogen peroxide solution for manufacturing a semiconductor product, it is necessary to avoid elution of metal into the organic solvent, the ultrapure water or the aqueous hydrogen peroxide solution. For this reason, it is preferable that the insulating material be a material that does not contain a metal or a metal compound.

As the inorganic material, an electro-conductive carbon material is also preferable. Some carbon materials include a small amount of an organic group, but a carbon material that does not include an organic group in the main skeleton is described as an inorganic material in this specification. Such carbon materials include carbon black, carbon fibers, graphite and carbon nanomaterials.

Among the carbon materials, nanocarbon materials are preferable because they easily lower the volume resistance value of the member to a desired level by using a small amount thereof, contain almost no metal, and do not easily elute metal into the insulating material or adhere metal to the insulating material. The nanocarbon material is preferably one or more selected from the group consisting of carbon nanotubes, carbon nanohorns, graphenes, nanographites, fullerenes and carbon nanocoils. Among these, carbon nanotubes are preferable because they are easy to obtain and do not easily detach from the surface of the member. The carbon nanotube may be a multiwalled carbon nanotube or a single-walled carbon nanotube. The short diameter (fiber diameter) of the carbon nanotube is not particularly limited, but is preferably 1 to 50 nm, more preferably 3 to 30 nm, and particularly preferably 5 to 20 nm. Examples of the long diameter of the carbon nanotube include 5 nm to 10 µm, 7 nm to 5 µm, and 10 nm to 1 µm. The carbon nanotube may be, for example, in a fiber shape having a fiber length of about 100 to 1,000 µm, preferably 150 to 600 µm or 200 to 500 µm.

As the organic material, for example, an electro-conductive polymer material can be used. When a polymer material is used as an electro-conductive material, a resin composition having a sea-island structure, in which a matrix resin is a sea component and an electro-conductive polymer material is an island component, is used as a material for the member.

The content of the electro-conductive material in the resin composition used as the member is not particularly limited as long as the object of the present invention is not hampered. The content of the electro-conductive material in the resin composition is preferably 20% by mass or less, 10% by mass or less, 5% by mass or less, 3% by mass or less, 2% by mass or less, 1% by mass or less, 0.7% by mass or less, and 0.5% by mass or less. The smaller the content of the electro-conductive material, the more preferable the resin composition from the viewpoint of suppressing detachment of the electro-conductive material into a flowable insulating material such as a chemical liquid for manufacturing a semiconductor product. The lower limit of the content of the electro-conductive material in the resin composition is not particularly limited as long as the member having a desired performance can be obtained. The lower limit of the content is, for example, preferably 0.01% by mass, more preferably 0.03% by mass, and particularly preferably 0.05% by mass, from the viewpoint that the volume resistance of the member is sufficiently low.

### <Matrix Resin>

The matrix resin achieves a function to protect an article comprising the member from contact with the flowing insulating material in the member.

The matrix resin may be a thermoplastic resin or a curable resin. The curable resin is not particularly limited as long as it is a cured product of a curable compound. The method of curing the curable compound may be thermal or photo-curing. The matrix resin may be a mixture of two or more resins (polymer alloy).

The tensile strength of the matrix resin is preferably 12.5 MPa or more and 14.5 MPa or more from the viewpoint of the strength of the member. The matrix resin preferably has a tensile elongation of 200% or more, and more preferably 250% or more. These values are values measured in accordance with the ASTM D638.

Examples of the thermoplastic resin include polyamide resins (nylon resins), polyester resins (a polyethylene terephthalate resin, a polybutylene terephthalate resin, a polyethylene naphthalate resin and the like), polycarbonate resins, polyphenylene ether resins, polyarylene sulfide resins, polyether ether ketone resins, liquid crystal polymers, fluororesins, polysulfone resins, polyethersulfone resins, polyarylate resins, polyamideimide resins, polyetherimide resins and thermoplastic polyimide resins.

Examples of the curable resin include phenolic resins, urea resins, melamine resins, unsaturated polyesters, epoxy resins, diallylphthalate resins, silicone resins, polyimide resins and cured products of an acrylic monomer.

When the matrix resin is a cured product of a curable compound, the matrix resin is typically formed by heating or exposing a composition containing the curable compound and a curing agent or a photopolymerization initiator. Therefore, when the matrix resin is a curable compound, an unreacted curing agent, a photopolymerization initiator or the like may be eluted into the insulating material. With regard to curable resins, cured products thereof often have poor flexibility, and therefore, it is sometimes difficult to perform construction or machining using a member containing an electro-conductive substance. In this regard, a thermoplastic resin is more preferred to a curable resin as the matrix resin.

Among the matrix resins disclosed above, fluororesins are preferable because they have various excellent properties such as chemical resistance, solvent resistance, mechanical properties such as tensile strength, and lubricity. Examples of fluororesins include PTFE (polytetrafluoroethylene resin), modified PTFE (a polytetrafluoroethylene resin modified with (1-perfluoroalkoxy-1,2,2-trifluoroethylene), PFA (a copolymer of tetrafluoroethylene and 1-perfluoroalkoxy-1,2,2-trifluoroethylene), FEP (a copolymer of tetrafluoroethylene and hexafluoropropylene), ETFE (a copolymer of tetrafluoroethylene and ethylene), PCTFE (a polychlorotrifluoroethylene resin) and PVdF (polyfluorinated vinylidene resin). Among these fluororesins, PTFE, modified PTFE and PFA are preferable from the viewpoints of heat resistance, chemical resistance, lubricity, electric characteristics and the like, and modified PTFE is more preferable.

The member explained above is preferably a member that comes into contact with a chemical liquid when the chemical liquid for manufacturing a semiconductor product is caused to flow;
wherein the member comprises a resin composition comprising a matrix resin and an electro-conductive material dispersed in the matrix resin;
the matrix resin is a fluororesin;
the electro-conductive material is a nanocarbon material; the content of the electro-conductive material in the resin composition is 1% by mass or less;
the volume resistance of the member is less than 10⁶ Ω·cm; when welding of the member is performed by blowing hot air at 300°C or more and melting a welding material containing a copolymer of tetrafluoroethylene and 1-perfluoroalkoxy-1,2,2-trifluoroethylene (PFA), the member can be welded at a welding speed of 50 mm/min or more and 300 mm/min or less. In the present specification, the member comprising a fluororesin and a nanocarbon material and exhibiting the predetermined characteristics described above is hereinafter referred to as an "electro-conductive fluororesin member".

In the case of the matrix resin being a fluororesin, when the member contacts with a chemical liquid for manufacturing a semiconductor product, the electro-conductive material easily detaches from the matrix resin, because of poor affinity between the fluororesin and the electro-conductive material. Using a nanocarbon material as the electro-conductive material and adjusting the content of the electro-conductive material in the resin composition to 1% by mass or less can, however, suppress the electro-conductive material from detaching from the matrix containing a fluororesin, while achieving a desired conductivity of the member (low volume resistance).

When members are joined to each other, it may be sometimes required for the members to be able to be joined by welding. In this regard, addition of an electro-conductive material to the matrix material often results in an excessively high thermal conductivity of the member. In this case, good welding of the members is difficult because the heat applied to the material easily escapes. On the other hand, the above-mentioned electro-conductive fluororesin member is weldable at a welding speed of 50 mm/min or more and 300 mm/min or less by blowing hot air at 300°C or more to melt a welding material containing PFA. In this context, being weldable means that when a portion other than the joint portion of bodies joined by welding is held, the bodies joined by welding do not separate due to separation of a welded surface under the weight of the bodies joined by welding. In the state after welding, it is preferable that no detachment or floating is observed between the welded surfaces. Applications of the above-mentioned member are not limited to the applications requiring welding. Although the use of PFA as a welding material has been disclosed above, in the above description, the use of PFA is specified only for the sake of convenience as one of the test conditions for confirming whether or not the member can be welded at the predetermined welding speed, when welding is performed by blowing hot air at 300°C or higher. Therefore, the material for the welding material used when welding the above-mentioned members is not limited to PFA.

When an electro-conductive fluororesin member is welded, for example, a plurality of surfaces that a single member has may be welded together or two or more members may be welded together. As a specific example of welding between a plurality of surfaces that a single member has, a case can be mentioned where a single member in a sheet shape is rolled into a cylindrical shape and the seam is welded.

The welding condition for the electro-conductive fluororesin member is not particularly limited as long as it can be welded to a desired state. The lower limit of the temperature of the hot air is 300°C or more, and is preferably 400°C or more, more preferably 500°C or more, because it is easy to firmly perform welding while increasing the welding speed. The upper limit of the temperature of the hot air varies depending on the type and composition of materials included in the electro-conductive fluororesin member, but is naturally determined within a range in which the electro-conductive fluororesin member does not deform to an undesired degree during welding. From the viewpoint of safety of the welding operation and reduction of the amount of energy consumed in the welding operation, the temperature of the hot air is preferably in the range of 300°C or more and 500°C or less or in the range of 300°C or more and 400°C or less. When the temperature of the hot air is 300°C or more, the welding material is usually sufficiently softened or melted, so that the welding can be performed satisfactorily. The welding speed is preferably 50 mm/min. or more and 400 mm/min. or less, and more preferably 100 mm/min. or more and 300 mm/min. or less, from the viewpoint that welding can be performed more firmly. Further, from the viewpoint of the efficiency of the welding operation, the welding speed is preferably 200 mm/min. or more and 500 mm/min. or less, and more preferably 300 mm/min. or more and 500 mm/min. or less.

### <Preparation Method of Resin Composition>

The method for preparing the resin composition comprising a matrix resin and an electro-conductive material disclosed above is not particularly limited as long as both can be uniformly mixed. Preferred specific examples of the method for preparing the resin composition are disclosed below.

When the matrix resin is a thermoplastic resin, the resin composition in which an electro-conductive material is dispersed in a matrix resin can be manufactured by mixing the matrix resin and the electro-conductive material by a general melt kneading method using a single-screw extruder, a twinscrew extruder or the like. When the matrix resin exhibits thermoplasticity but is difficult to melt and process the matrix resin due to problems such as melt viscosity, the powder of the matrix resin and the powder of the electro-conductive material may be uniformly mixed, compression molded, and then fired to obtain the resin composition.

When the matrix resin is soluble in a solvent, a resin composition in which an electro-conductive material is dispersed in the matrix resin can be produced by the following method. First, a dispersion liquid in which an electro-conductive material is dispersed in an organic solvent solution of the matrix resin is prepared. The obtained dispersion liquid is formed into a desired shape by a method such as coating or casting, and the organic solvent is removed by a method such as heating or depressurization, thereby the resin composition in which an electro-conductive material is dispersed in the matrix resin can be obtained.

When polymerization is not inhibited by an electro-conductive material, the polymerization may be performed in the presence of a predetermined amount of electro-conductive material to produce the resin composition in which an electro-conductive material is dispersed in the matrix resin.

When the matrix resin is a curable resin, a precursor composition is prepared by mixing a curable compound, an electro-conductive material, and, if necessary, a curing agent or a photopolymerization initiator, then the obtained precursor composition is molded into a desired shape, and then cured by a method such as heating or exposure, whereby the resin composition in which an electro-conductive material is dispersed in the matrix resin can be manufactured.

Application of the member containing the resin composition disclosed above to a portion that comes into contact with a flowable insulating material in various articles suppresses accumulation of static electricity, and this achieves suppression of dielectric breakdown of the member on the surface of the article.

### <<Molding>>

The member disclosed above is suitably used in the form of a molded article comprising only the member. Such a molded article is suitably used in an application in which the molded article comes into contact with a chemical liquid when the chemical liquid for manufacturing a semiconductor product is caused to flow. As the member, the above-mentioned electro-conductive fluororesin member is preferable. Specific examples of such molded articles include connecting tubes, tube end adapters, gaskets and the like.

A connecting tube may be used to connect two pipes, a pipe and an apparatus, or two apparatuses, etc., or two or more connecting tubes may be connected to each other and used in the same manner as a pipe. The connecting tube may be a straight tube, or may be a tube bent into an arc, a substantially right angle, an S-shape or the like. The connecting tube may be a pipe having a branch of a Y-shape, a cross shape or the like. The cross-sectional shape of the connecting tube is not particularly limited. The cross-sectional shape of the connecting tube is typically circular, but may be a quadrangle such as a square or a rectangle or a polygon such as a regular hexagon or a regular octagon.

At least one end of the connecting tube may have a fitting projection integrally formed with the pipe body. The fitting projection is provided with a hole (cavity) communicating with the space inside the pipe body so that the fluid can freely flow from one end to the other end of the connecting tube. Specific embodiments of the connecting tube include a connecting tube having fitting projections at both ends, a connecting tube having a fitting projection at only one end, and a connecting tube having no fitting projections at both ends.

The fitting projection is fitted into an opening at an end of another connecting tube where a fitting projection is not formed. This allows the two connecting tubes to be connected to each other. In this case, it is preferable that the fitting projection is formed so as to be slightly larger than the opening at the end of the connecting tube into which the fitting portion is fitted. In this case, the connecting tubes are firmly joined to each other by pushing the fitting projection of one of the connecting tubes into the opening at the end of the other connecting tube by an external force.

It is also preferable to provide threads on the fitting projection, and to provide threads having a shape corresponding to the shape of the threads on the fitting projection, in the opening at the end of the connecting tube into which the fitting projection is fitted. This allows the threaded fitting projection to be screwed into the threaded opening at one end of the other connecting tube.

A tube end adaptor is a component that is attached to an end having an opening of a pipe. When a flowable insulating material is discharged from a pipe, static electricity is easily generated particularly in the vicinity of the opening at the end of the pipe. However, if a tube end adaptor is attached to the end of the pipe, static electricity generated at the end of the pipe can be satisfactorily removed.

The shape of the tube end adaptor is not particularly limited, and is appropriately designed depending upon the shape of the end of the pipe to which the tube end adaptor is attached. For example, when a pipe is cylindrical, the shape of the tube end adaptor is typically a ring shape having an outer diameter slightly larger than the outer diameter of the pipe and an inner diameter equivalent to the inner diameter of the pipe or slightly smaller than the inner diameter of the pipe.

The tube end adaptor may be attached to an end of a pipe by being physically fitted into the pipe with external force. In this case, an annular groove having a width slightly narrower than the wall thickness of the end of the pipe is provided on the surface of the tube end adaptor where the tube end adaptor contacts with the end of the pipe. Pushing the end of the pipe into such a groove enables the tube end adaptor to be fixed to the end of the pipe. Alternatively, it is also possible to thread a tube end adaptor and an end of a pipe and screw the tube end adapter into the end of the pipe. In addition, the tube end adaptor may be secured to an end of a pipe using an adhesive. When the pipe is made of a resin material, the end of the pipe and the tube end adaptor may be welded together by a method such as welding.

The gasket is typically a ring-shaped sheet used by being sandwiched between flanges of pipes or tanks. Gaskets are often referred to by those skilled in the art as "packings", "packing sheets," or the like. The shape, size and the like of the gasket are not particularly limited, and are appropriately set in accordance with the shape and size of a joint surface of the pipe or the like on which the gasket is disposed. For example, the shape of a flange at the end of a pipe is determined by JIS standards, etc.

### <<Composite Molded Articles>>

As the molded article comprising the above-mentioned member, a composite molded article comprising an electro-conductive portion comprising the above-mentioned member, and a welding portion comprising a thermoplastic resin or thermoplastic resin composition comprising no electro-conductive material can also be preferably used. Although the above-mentioned member, which comprises an electro-conductive material, may be welded, easiness of welding and strength of the joint portion after welding may be slightly inferior in some cases to a thermoplastic resin or thermoplastic resin composition comprising no electro-conductive material, because the member comprises an electro-conductive material. However, since the above-mentioned composite molded article comprises a welding portion comprising a thermoplastic resin or thermoplastic resin composition comprising no electro-conductive material, welding portions can be easily and firmly welded together by welding the welding portions thereof. Here, as the member, the above-mentioned electro-conductive fluororesin member is preferable.

Specific examples of the composite molded article include a pipe in which in at least one end, the end and a portion in the vicinity of the end are welding portions, and a portion other than the welding portion is an electro-conductive portion. In a pipe that is a composite molded article, it is preferred that in each of all ends, the end and a portion in the vicinity of the end are welding portions. Such a pipe may be a straight pipe or a pipe bent into an arc, a substantially right angle, an S-shape or the like. Such a pipe may be a pipe having a branch such as a Y-shape, a cross shape or the like. The cross-sectional shape of the pipe is not particularly limited. The cross-sectional shape of the pipe is typically circular, but may be a quadrangle such as a square or a rectangle or a polygon such as a regular hexagon or a regular octagon.

Preferred specific examples of such a pipe includes a linear pipe having two open ends, wherein at the two ends, the ends and portions in the vicinity of the ends are welding portions, and a portion between the two welding portions is an electro-conductive portion. Such a linear pipe is preferably a straight pipe (pipe in a straight shape) or a pipe bent into a substantially right angle (so-called an elbow pipe). The pipes disclosed above are typically used in a state of being connected with another pipe by welding the welding portions together.

Another preferred example of the composite molded article is a nozzle liner, which is used in a state that the nozzle liner is fitted into a tubular nozzle projecting towards the exterior of a tank. The shape of the nozzle liner is approximately a shape in which a ring-shaped sheet is integrated into one end of a straight pipe having openings at both ends. The ring-shaped sheet is integrated with the straight pipe in a state in which the position of the opening of the ring-shaped sheet and the position of the opening of the end of the straight pipe are aligned with each other. Here, the inner diameter of the straight pipe and the opening diameter of the ring-shaped sheet are substantially equal to each other. In such a nozzle liner, typically, welding portions are provided at an end of a straight pipe and in the vicinity of the end, with the end being in the side not in contact with the ring-shaped sheet, as well as on an outer edge portion of the ring-shaped sheet. An electro-conductive portion is provided in a portion other than the welding portions. The method of manufacturing such a nozzle liner is not particularly limited. For example, the nozzle liner can be manufactured by pressurizing and spreading, under heating, one end of a straight pipe having welding portions at both ends and an electro-conductive portion between the welding portions at both ends so as to deform the straight pipe.

Such a nozzle liner is used in a state where a welding portion provided on an outer edge portion of a ring-shaped sheet is welded to a lining material provided in the tank, while the nozzle liner is inserted into a tubular nozzle projecting toward the outside of the tank, from the inside of the tank. Attaching such a nozzle liner to the tank enables static electricity generated on the inner surface of the nozzle liner when a flowable insulating material is discharged from the nozzle, to be satisfactorily removed.

Still other preferable examples of the composite molded article include a sheet having an electro-conductive portion and a welding portion. Such a sheet has a charge eliminating performance by including an electro-conductive portion. Such a sheet is typically preferably used as a sheet for lining, which is disclosed below.

At least a part of the outer edge portion of the sheet preferably comprises a welding portion and a part other than the welding portion comprises an electro-conductive portion, because the sheet is easily joined by welding. In the sheet as a composite molded article, it is preferable that the entire outer edge portion of the sheet is formed of a welding portion, and a portion other than the welding portion is formed of an electro-conductive portion. Note that the electro-conductive portion may be divided into two or more segments on the main surface of the sheet.

### <<Sheet for Lining>>

The member disclosed above is suitably used as a material for a sheet for lining the inside of a pipe, a tank or the like. The entire sheet may be formed of the aforementioned member (preferably the aforementioned electro-conductive fluororesin member) or a part of the sheet may be formed of the aforementioned member. As the member used for the sheet, the above-mentioned electro-conductive fluororesin member is preferable. When a sheet a part of which is formed of the aforementioned member, such a sheet is likewise to the sheet comprising the electro-conductive portion and the welding portion disclosed for the composite molded article.

When lining the inside of a pipe, a tank or the like by using a sheet for lining, it is also preferable to identify a spot where turbulence of a flowable insulating material (in particular, a chemical liquid for manufacturing a semiconductor product) is apt to occur or a spot where the flow rate of the flowable material is fast, in the pipe or the inside of the tank, by means of CAE analysis or the like, and then to configure only these spots in the lining material with the aforementioned member, preferably the aforementioned electro-conductive fluororesin member. This is because static electricity is apt to be generated at a spot where turbulence is apt to occur or a spot where the flow velocity is fast. In this manner, the cost of lining can be suppressed by configuring only the portion where static electricity is apt to occur with a member comprising an electro-conductive material.

The shape of the sheet may be a flat shape or a curved shape adapted to the shape of a pipe or a layer. Such a sheet is attached to the inner surface of a pipe or the inside of a tank, and is used as a lining material for eluting impurities from the pipe or the tank and protecting the pipe or the tank itself.

When lining is applied, a seam may be formed between a plurality of sheets. In this case, after a rod comprising a readily fusible resin or a strip-shaped sheet is applied to the seam, the rod or the sheet is melted by heating to fill the seam. The rod or the sheet used to fill the seam may also comprise the electro-conductive material disclosed above.

Since joining sheets by welding is easy, it is preferable to use a sheet for lining which comprises an electro-conductive portion comprising the aforementioned member (preferably, the aforementioned electro-conductive fluororesin member), and a welding portion comprising a thermoplastic resin or thermoplastic resin composition comprising no electro-conductive material, and in which at least a part of the outer edge is a welding portion. When such a sheet is used, the welding portions of the sheet can be easily and firmly joined to each other, and as a result, the work of lining is easy.

The thickness of the sheet is not particularly limited within a range that does not hinder the object of the present invention, and the thickness of the sheet is typically preferably from 0.5 to 50 mm, more preferably from 1.0 to 6.0 mm, and even more preferably from 2.0 to 3.0 mm.

In addition, a laminate including at least a layer including the above-mentioned member can also be suitably used as a sheet for lining. Examples of suitable laminates include a laminated sheet having a layer including the aforementioned member as a lower layer and a resin layer containing no electro-conductive material as an upper layer, and a laminated sheet having a layer including the aforementioned member as an intermediate layer and resin layers each containing no electro-conductive material as an upper layer and a lower layer. Examples of a preferable material for the resin layer containing no electro-conductive material include materials similar to those disclosed above for the matrix resin.

If the surface which comes into contact with the insulating material is a resin layer containing no electro-conductive material, mixing of the electro-conductive material into the insulating material due to detachment of the electro-conductive material can be prevented. On the other hand, if a layer including the above-mentioned member is present in the lower layer or the intermediate layer, even if dielectric breakdown occurs on the surface of the laminated sheet in contact with the insulating material, the dielectric breakdown is less likely to occur in the layer including the above-mentioned member, so that a defect that penetrates the laminated sheet is unlikely to occur.

When a liquid, gaseous or granular insulating material is distributed, stirred, or stored by using the pipe or the tank lined with the sheet disclosed above, the occurrence of dielectric breakdown in the lining of the inner surface of the pipe or the tank can be remarkably suppressed.

### <<Distribution Mechanism>>

The distribution mechanism is a distribution mechanism for distributing a liquid, gaseous or granular insulating material. In such a distribution mechanism, at least a part of its surface which comes into contact with the insulating material includes the aforementioned member. In particular, the distribution mechanism is preferably a distribution mechanism for distributing a chemical liquid for manufacturing a semiconductor product, and the aforementioned member is preferably an electro-conductive fluororesin member.

The distribution mechanism is not particularly limited as long as it can move a flowable insulating material. Typical examples of the distribution mechanism include a delivery apparatus for a flowable material that includes a pipe, a pump, a blower or a suction device. Other specific examples include screw conveyors, bucket conveyors and the like. In addition, a pipe, a chute and the like for dropping the flowable material from a high position to a low position are also included in the distribution mechanism. When the insulating material is a chemical liquid for the manufacture of semiconductor products, the distribution mechanism typically comprises a pipe and a pump.

Specific examples of distribution mechanisms include:
a supply system for supplying a chemical liquid for manufacturing a semiconductor product for the purpose of processing, washing or the like to a semiconductor substrate, a semiconductor substrate under processing, a semiconductor product or the like;
a circulating system for a refrigerant or a heat medium in a chemical reactor, a refrigerator, a freezer, an air conditioner and the like;
a heating or cooling system for a flowable material using a heat exchanger and a supply system for supplying a flowable material as a reaction reagent or a solvent to a chemical reactor;
a supply system for supplying a flowable material from a storage tank of the flowable material to a dispensing device for dispensing and packaging the flowable material;
a supply system for supplying a fluid material to be stored in a storage tank into the storage tank;
a fueling system in a gas station for supplying an oil from a storage tank of oils such as gasoline and light oil to a fuel tank of an automobile; and
a supply system for supplying an organic solvent to a semiconductor manufacturing apparatus for washing or the like.

In the above-mentioned distribution mechanism, it is preferable that at least a part, preferably the whole, of the inside of the pipe is formed of the above-mentioned member. More preferably, the entire inside of the pipe is lined with a sheet including the aforementioned member.

A surface of a portion, which is portion of a pump and which comes into contact with the flowable material, is also preferably formed of the aforementioned member. The type of pump is not particularly limited, and may be a piston pump, a plunger pump, a diaphragm pump, a gear pump, a vane pump, a screw pump or the like.

In the various pumps disclosed above, it is preferred that at least a surface, which is a surface of a casing and which comes into contact with a flowable material, is formed of the aforementioned member. In addition, the part to which the above-mentioned member is applied in the pump is not particularly limited and such a part is appropriately selected depending upon the type of pump. For example, a surface of a piston in the piston pump, a plunger in the plunger pump, a diaphragm in the diaphragm pump, a gear in the gear pump, vanes in the vane pump, screws in the screw pump and the like are preferably formed of the aforementioned member. When surfaces of bolts, nuts, screws and the like which fasten components of the pump are brought into contact with the insulating material, these surfaces may be formed using the aforementioned member. The components of these pumps may also be entirely formed of the aforementioned member, as long as the components do not break during the transfer of the flowable material.

When the distribution mechanism is a screw conveyor or a bucket conveyor, the surface of the screw or the surface of the bucket is formed of the aforementioned member. Note that the entire screw or the entire bucket may be formed of the aforementioned material as long as the screw or bucket does not break by the transfer of the material.

### <<Tank>>

The tank is a tank for storing or stirring a liquid, gaseous or granular insulating material. In such a tank, at least a part of its surface which comes into contact with the insulating material, is formed of the aforementioned member. The tank is typically a storage tank or a stirring tank. A typical example of the stirring tank is a reactor. The storage tank for storing the insulating liquid is disclosed below in more detail.

### (Storage Tank)

Examples of the storage tank for storing an insulating material include a tank and a gas cylinder for storing an organic solvent, ultrapure water, an aqueous hydrogen peroxide solution, and a gas. Examples of the storage tank for storing granules include a silo for storing feed or the like. The storage tank may be provided with a valve for extracting the stored insulating material at any position of the storage tank.

In the storage tank disclosed above, preferably at least a part, preferably the entire surface, of the inner surface of the body of the storage tank is formed of the aforementioned member. More preferably, the entire inner surface of the storage tank is lined with a sheet comprising the aforementioned member. Further, it is preferable that the storage tank is a storage tank for storing a chemical liquid for manufacturing a semiconductor product, and the member of the sheet used for lining is the electro-conductive fluororesin member.

It is also preferable that the inside of the above-mentioned valve or the inside of the pipe between the storage tank and the valve is formed of the above-mentioned member.

The type of vales is not particularly limited. Examples of the valve include, for example, gate valves, glove valves, ball valves, needle valves, butterfly valves, and piston valves. It is preferable to form a surface of a flow path, a packing, a disk (valve body), a stem supporting the disk (valve stem), a piston or the like of these valves by using the aforementioned member.

When the surfaces of bolts, nuts, screws and the like fastening the components constituting the valve contact with an insulating material, these surfaces may be formed using the aforementioned member.

For example, packing, disks, pistons, bolts, nuts, screws and the like may be entirely formed using the aforementioned member. When the size of the valve is small or when excessive pressure is not applied to the valve, the entire valve body may be formed using the aforementioned member.

### (Stirring Tank)

The tank for stirring an insulating material is not particularly limited as long as the stirring tank has a stirring function. Typical examples of the stirring tank include a so-called reactor or a granule mixing apparatus. Stirring is typically performed using a stirring blade or a screw. Further, the tank may be a tank in which the insulating material is stirred without using a stirring equipment such as a stirring blade, but circulation operation is conducted by extracting the insulating material from at least one place of the tank and returning it back into the tank through at least one place of the tank.

Examples of the surface which comes into contact with an insulating material include an inner surface of the tank body, a surface of a baffle provided inside the tank body, a surface of a stirring blade, a surface of a shaft supporting the stirring blade, an inner surface or an outer surface of a coil for circulating heat medium or refrigerant, a surface of a sealed tube for holding a temperature sensor such as a thermocouple, an inner surface or an outer surface of a dropping tube for supplying a gas or a liquid into the tank. The tank does not necessarily need to be provided with a stirring blade, a shaft, a coil, a sealing pipe, a dripping tube or the like.

The stirring tank may be provided with a valve for extracting the insulating material stirred in the tank from the tank. Such a valve is typically provided at or near the bottom of the tank. The type and the like of the valve are as disclosed above for the storage tank.

When the size of the tank is small, the whole of a coil for circulating heat medium or refrigerant, a sealing tube for holding a temperature sensor such as a thermocouple, a dripping tube and the like may be formed using the aforementioned member.

### <<Apparatus comprising at Least One of Distribution Mechanism and Tank>>

An apparatus comprising at least one of the above-mentioned distribution mechanism and the tank is preferably used for various purposes because such an apparatus is lined with a member which has excellent durability and which hardly causes dielectric breakdown. When at least a part of the lining includes the above-mentioned electro-conductive fluororesin member, good suppression of dielectric breakdown due to low resistance and suppression of detachment of the nanocarbon material from the member can be achieved at the same time.

Such apparatuses include, for example, chemical plants for manufacturing various chemical products; packaging plants for dispensing and packaging flowable insulating materials; air conditioning devices, refrigeration devices and freezing devices each comprising a refrigerant circulation device; heat exchangers through the interior of which a flowable material is caused to flow for heating or cooling; and apparatuses for manufacturing various electrical and electronic components, semiconductor devices or the like, each apparatus comprising a device for supplying an organic solvent, ultrapure water or an aqueous hydrogen peroxide solution for the purpose of cleaning or the like.

### <<Storage Tank for storing Insulating Liquid>>

Hereinafter, a preferable embodiment of the storage tank for storing an insulating liquid is disclosed with reference to FIG. 1. FIG. 1 is a diagram schematically showing a cross section of a storage tank. Storage tank 10 includes tank body 1, pit 2, and dripping tube 3 inserted into the tank body. Pit 2 is disposed inside tank body 1. Dripping tube 3 is disposed such that one end of dripping tube 3 is positioned proximate to an opening of pit 2. Therefore, pit 2 is typically provided on the bottom side of tank body 1. That is, storage tank 10 of the embodiment shown in FIG. 1 is typically installed so that pit 2 is located on the side close to the ground surface. Pit 2 rectifies a flow of insulating liquid sucked or discharged from the end of dripping tube 3.

At least a part of at least one surface, which comes into contact with an insulating liquid, of at least one selected from tank body 1, pit 2, and dripping tube 3 is formed of the aforementioned member. Here, the insulating liquid is preferably a chemical liquid for manufacturing a semiconductor product. It is preferable that at least a part of the surface of pit 2 is formed of the aforementioned member because the flow of the insulating liquid is strong and static electricity is easily generated and accumulated when the insulating liquid is sucked or discharged at the end of dripping tube 3. Pit 2 may be a composite molded product, the bottom of which is made of an electro-conductive portion and the other part of which includes a welding portion. The bottom of pit 2 is always in contact with the insulating liquid, but if the bottom of pit 2 is an electro-conductive portion, static electricity generated by the contact between pit 2 and the insulating liquid can be satisfactorily removed.

As the member forming a surface, which is a surface of at least one selected from tank body 1, pit 2 and dripping tube 3 and which comes into contact with the insulating liquid, a member comprising a resin composition containing a fluororesin and carbon nanotubes is preferred. The reason for this is in that such a member has excellent durability against an insulating liquid and is particularly easy to suppress dielectric breakdown.

Hose 4 and a pipe (not shown) are connected to dripping tube 3. Coupler 5 is provided at an end of hose 4, and coupler 5 is connected to a transport vehicle (not shown) for transporting an insulating liquid such as an organic solvent, a pump (not shown) or the like to supply the liquid from storage tank 10 or to supply the liquid to storage tank 10. Liquid contact surfaces of hose 4 and coupler 5 are also preferably formed of the aforementioned members.

As the insulating liquid stored in storage tank 10, an organic solvent, ultrapure water or an aqueous hydrogen peroxide solution is preferable. As the organic solvent, an organic solvent for manufacturing a semiconductor product is preferable because elution of impurities such as metals due to dielectric breakdown of the lining in storage tank 10 can be prevented.

The organic solvent, the ultrapure water, and the aqueous hydrogen peroxide solution stored in storage tank 10 disclosed above have a very low risk of elution of impurities such as metals. As such, use of the organic solvent, the ultrapure water or the aqueous hydrogen peroxide solution stored in storage tank 10 achieves production of semiconductor products of good quality, as well as suppression of generation of defective products caused by impurities.

Preferred examples of organic solvents used in the manufacture of semiconductor products include: alkanols such as methanol, ethanol, isopropanol, n-propanol, n-butanol, isobutanol, n-pentanol, and n-hexanol; glycols such as ethylene glycol, propylene glycol, diethylene glycol, dipropylene glycol, triethylene glycol, tripropylene glycol, polyethylene glycol and polypropylene glycol; (poly)alkylene glycol monoalkyl ethers such as ethylene glycol monomethyl ether, ethylene glycol monoethyl ether, ethylene glycol-n-propyl ether, ethylene glycol mono-n-butyl ether, diethylene glycol monomethyl ether, diethylene glycol mono-ethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether and tripropylene glycol monoethyl ether; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate and propylene glycol monoethyl ether acetate; other ethers such as diethylene glycol dimethyl ether, diethylene glycol methyl ethyl ether, diethylene glycol diethyl ether and tetrahydrofuran; ketones such as acetone, methyl ethyl ketone, cyclohexanone, 2-heptanone and 3-heptanone; alkyl lactate esters such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methyl-3-methoxybutyl acetate, 3-methyl-3-methoxybutylpropionate, ethyl acetate, n-propyl acetate, isopropyl acetate; n-butyl acetate, isobutyl acetate, n-pentyl formate, isopentyl acetate, n-butyl propionate, ethyl butyrate, n-propyl butyrate, isopropyl butyrate, n-butyl butyrate, ethyl lactate, n-propyl lactate, isopropyl lactate, n-butyl lactate, methyl pyruvate, ethyl pyruvate, n-propyl pyruvate, methyl acetoacetate, ethyl acetoacetate and ethyl 2-oxobutanoate; and aromatic hydrocarbons such as toluene and xylene; amides such as N-methylpyrrolidone, N,N-dimethylformamide, N,N-dimethylacetamide. These organic solvents can be used alone or in combination of two or more.

### EXAMPLES

Hereinafter, the present invention is more specifically disclosed with reference to the Examples, and the scope of the present invention is not limited to these Examples.

### [Example 1]

### • Method for producing test piece for resistance measurement and measuring method

500 g of a powder obtained by mixing 0.05% by mass of carbon nanotubes (CNTs) in PTFE (polytetrafluoroethylene) was uniformly filled into a mold having a lower lid with a diameter of 150 mm, and the mold was covered with an upper lid. The mold was installed in a press molding machine, and the upper lid was pressed at a pressure of 19.6 MPa at an ambient temperature to compression mold the powder. The compression molded product was taken out from the mold and fired at 380°C for 5 hours in a hot air circulation firing furnace. The obtained fired molded article was subjected to machining process to produce a disk-shaped molded article having a thickness of 2.4 mm. The surface resistance and the volume resistance of the obtained test piece were measured by a method according to JIS K 6911 using an electric resistance measuring device, and the data shown in Table 1 were obtained.

### [Comparative Example 1]

500 g of polytetrafluoroethylene (PTFE) powder was uniformly filled into a mold having a lower lid with a diameter of 150 mm, and the mold was covered with an upper lid. The mold was installed in a press molding machine, and the upper lid was pressed at a pressure of 19.6MPa at an ambient temperature to compression mold the powder. The compression molded product was taken out from the mold and fired at 380°C for 5 hours in a hot air circulation firing furnace. The obtained fired molded article was subjected to machining process to produce a disk-shaped molded article having a thickness of 2.4 mm. The surface resistance and the volume resistance of the obtained test piece were measured by a method according to JIS K 6911 using an electric resistance measuring device, and the data shown in Table 1 were obtained.

**[Table 1]**

| | Unit | Measurement standard | Example 1 PTFE/CNT0.05wt% | Comparative Example 1 PTFE |
|---|---|---|---|---|
| Surface resistance | Ω/□ | JIS K 6911 | 10² - 10³ | >10¹⁸ |
| Volume resistance | Ω·cm | JIS K 6911 | 10² - 10³ | >10¹⁸ |

Comparison between Example 1 and Comparative Example 1 shows that the surface resistance and the volume resistance of the member of Example 1 are significantly lower than the volume resistance of the member of Comparative Example 1. According to this result, it is understood that static electricity is less likely to accumulate in the member of the Example 1, and dielectric breakdown is less likely to occur.

### [Elution Test]

Elution tests of metals were performed on the member of Example 1 and the member of Comparative Example 1, according to the following method.

### (Example 1)

The molded article prepared in Example 1 was processed into a test piece having a length of 30 mm, a width of 10 mm, and a thickness of 2.4 mm. In a clean bench, the test piece was washed with 0.1 N nitric acid (EL-grade), washed with ultrapure water, and air-dried. The test piece and 250 g of EL grade IPA (isopropyl alcohol) were placed in a clean bottle made of PFA, sealed, and immersed for 7 days at room temperature. On a platinum dish washed with 0.1 N nitric acid (EL grade) and ultrapure water, the IPA after immersion was evaporated, followed by extraction with 0.1 N nitric acid (EL grade), and a measurement sample was collected into a measuring container. All operations up to sampling were carried out in a clean bench to prevent contamination from the environment. Masses of main trace metals were measured using ICP-MS (inductively coupled plasma mass spectrometer) and converted into the concentration in the immersion liquid to obtain the data shown in Table 2.

### (Comparative Example 1)

Similarly to Example 1, the molded article prepared in Comparative Example 1 was processed into a test piece having a length of 30 mm, a width of 10 mm, and a thickness of 2.4 mm. In a clean bench, the test piece was washed with 0.1 N nitric acid (EL-grade), washed with ultrapure water, and air-dried. The test piece and 250 g of IPA (EL grade) were placed in a clean bottle made of PFA, sealed, and immersed for 7 days at room temperature. On a platinum dish washed with 0.1 N nitric acid (EL grade) and ultrapure water, the IPA after immersion was evaporated, followed by extraction with 0.1 N nitric acid (EL grade), and a measurement sample was collected into a measuring container. All operations up to sampling were carried out in a clean bench to prevent contamination from the environment. Masses of main trace metals were measured using ICP-MS (inductively coupled plasma mass spectrometer) and converted into the concentration in the immersion liquid to obtain the data shown in Table 2.

### (Blank)

In a clean bench, 250 g of IPA (EL grade) was evaporated on a platinum dish washed with 0.1 N nitric acid (EL grade) and ultrapure water, followed by extraction with 0.1 N nitric acid (EL grade). Masses of main trace metals were measured using ICP-MS (inductively coupled plasma mass spectrometer), and converted into the concentration in the liquid to obtain the data in the table.

**[Table 2]**

| IPA-immersed metal concentration Unit: ppb | Example 1 PTFE/ CNT0.05wt% | Comparative Example 1 PTFE | Blank IPA |
|---|---|---|---|
| Ag | 0.01 or less | 0.01 or less | 0.01 or less |
| Al | 0.01 or less | 0.01 or less | 0.01 or less |
| Ca | 0.01 or less | 0.01 or less | 0.01 or less |
| Cr | 0.01 or less | 0.01 or less | 0.01 or less |
| Cu | 0.01 or less | 0.01 or less | 0.01 or less |
| Fe | 0.05 | 0.05 | 0.05 |
| K | 0.01 or less | 0.01 or less | 0.01 or less |
| Na | 0.01 or less | 0.01 or less | 0.01 or less |
| Ni | 0.01 or less | 0.01 or less | 0.01 or less |
| Zn | 0.01 or less | 0.01 or less | 0.01 or less |

It can be seen from Table 2 that the addition of electro-conductive materials (CNTs) to the matrix resin (PTFE) hardly causes elution of metals into the organic solvent.

### [Comparative Example 2]

A molded article was produced in the same manner as in Example 1 except that the content of the electro-conductive material (CNT) in the resin composition was changed to 15% by mass. The obtained molded article was processed into a test piece having a length of 30 mm, a width of 10 mm and a thickness of 2.4 mm.

### [Comparative Example 3]

A molded article was produced in the same manner as in Example 1 except that carbon black (CB) was used as the electro-conductive material and the content of the electro-conductive material (CNT) in the resin composition was changed to 15% by mass. The obtained molded article was processed into a test piece having a length of 30 mm, a width of 10 mm and a thickness of 2.4 mm.

### [Detachment Test]

The molded article obtained in Example 1 was used to prepare a test piece having the same shape (length: 30 mm, width: 10 mm, thickness: 2.4 mm) as the test piece used in the elution test. A detachment test was performed using the test piece including the member of Example 1, the test piece including the member of Comparative Example 2, and the test piece including the member of Comparative Example 3. The respective test pieces and a rotor were placed in a clean glass container with a volume of 500 mL, and 500 mL of ultrapure water was poured in. The test pieces were arranged to be leant against the side wall of the glass container. The ultrapure water in the container was then stirred with a magnetic stirrer at room temperature for two weeks to facilitate the detachment of the electro-conductive material. The amount of carbon contained in the ultrapure water after stirring for two weeks was measured using a total organic carbon meter, and was used as an index of the detachment of the electro-conductive material (carbon nanotube or carbon black). The measurement results of carbon content (TOC) are indicated in the table below.

**[Table 3]**

| | Example 1 | Comparative Example 1 | Comparative Example 2 |
|---|---|---|---|
| Content of electroconductive material in resin composition (% by mass) | 0.05 | 15 | 15 |
| Electroconductive material | CNT | CNT | CB |
| TOC (µg/L) | Less than 100 | Above 150 and less than 200 | Above 200 |

According to Table 3, when the content of the electro-conductive material (CNT) is 1 mass% or less in the resin composition containing a fluororesin and an electro-conductive material, it is understood that the detachment of the electro-conductive material into the fluid in contact with the test piece is suppressed to an extremely low level. On the other hand, it can be seen from Comparative Example 2 and Comparative Example 3 that when the content of the electro-conductive material in the resin composition was as large as 15% by mass, the electro-conductive material remarkably detached into the fluid in contact with the test piece.

### [Example 2]

Hereinafter, Example 2 discloses welding between a sheet-like composite molded article and a composite molded article. First, a region filled with a powder of PTFE (polytetrafluoroethylene) and a region filled with a CNT-containing powder obtained by mixing 0.025% by mass of CNT into a PTFE powder were provided in a mold, and the powders in the mold were compression molded. The compression molded product was taken out from the mold and fired at 380°C for 5 hours in a hot air circulation firing furnace. The obtained fired molded article was subjected to machining process to obtain a square-shaped sheet of 50 mm × 50 mm × 2.4 mm in thickness. The same operation was repeated to produce two sheets.

Each of the sheets included a 20 mm wide welding portion containing only PTFE and a 30 mm wide electro-conductive portion containing PTFE and CNTs. The end surface of the sheet in the side close to the welding portion was formed as a sloped surface.

The two sheets thus obtained were arranged such that the end surfaces of the welding portions faced to each other and contacted with each other, and a groove in a V-shaped cross-section was formed by the two end surfaces (sloped surfaces). A welding rod made of PFA (a copolymer of tetrafluoroethylene and 1-perfluoroalkoxy-1,2,2-trifluoroethylene) was pressed against the groove at a pressure of 0.3 to 0. 5 MPa to fill the groove with PFA while blowing hot air at 480°C into the groove formed between the end surfaces of the welding portions.

Next, while blowing hot air at 580°C to a PFA-made welding covering material (covering sheet) having a width of 14 mm × a thickness of 2.4 mm, the PFA-made welding covering material (covering sheet) was pressed under a pressure of 0.3 to 0.5 MPa, and the PFA-made welding covering material (covering sheet) was adhered by welding so that the center line of the covering sheet ran over the seam of the two sheets.

The two sheets were adhered together by performing welding travel so that the center line of the welding covering material ran over the seam between the two sheets. The welding speed at that time was 160 to 200 mm/min.

A test piece having a short side width of 10 mm and a long side width of 50 mm was cut out from a welded joined body so that the positions of two short sides were respectively 25 mm from the seam of the two sheets. As a result of measuring the tensile strength of the cut-out test piece in the direction perpendicular to the seam of the two sheets, the tensile strength was 30 kN/m. In addition, the welding covering material adhered well to the two sheets without floating or peeling.

### [Example 3]

A welded joined body was produced in the same manner as in Example 2 except that the whole of a square-shaped sheet of 50 mm × 50 mm × 2.4 mm in thickness was formed using a CNT-containing powder in which 0.025% by mass of CNTs was mixed with a PTFE powder. The welding speed in Example 3 was 100 to 150 mm/min. A test piece was cut out from the joined body in the same manner as in Example 2, and the tensile strength of the cut-out test piece was measured. The tensile strength was 29 kN/m. Upon observing the vicinity of a side which is included in the welding covering material and which is parallel to the seam of the two sheets, it was, however, found that there was slight floating and peeling between the welding covering material and the sheets.

### [Comparative Example 3]

A welded joined body was produced in the same manner as in Example 2 except that the whole of a square-shaped sheet of 50 mm × 50 mm × 2.4 mm in thickness was formed using a CNT-containing powder in which 15% by mass of CNTs was mixed with a PTFE powder. However, the produced joined body was easily disassembled from the joining surface when the joined body was lifted.

### EXPLANATION OF REFERENCE NUMERALS

- 10: Storage tank
- 1: Tank body
- 2: Pit
- 3: Dripping tube
- 4: Hose
- 5: Coupler

## Claims

1. A member that comes into contact with a chemical liquid for manufacturing a semiconductor product when the chemical liquid is caused to flow, comprising:
a resin composition comprising a matrix resin and an electro-conductive material dispersed in the matrix resin;
wherein the matrix resin is a fluororesin;
the electro-conductive material is a nanocarbon material;
the content of the electro-conductive material in the resin composition is 1% by mass or less;
the volume resistance of the member is 10⁶ Ω·cm or less; and
welding of the member can be performed at a welding speed of 50 mm/min or more and 300 mm/min or less when welding is performed by blowing hot air at 300°C or more and melting a welding material containing a copolymer of tetrafluoroethylene and 1-perfluoroalkoxy-1,2,2-trifluoroethylene.

2. The member according to claim 1, wherein the electro-conductive material is a material including no metal or metal compound.

3. The member according to claim 1 or 2, wherein the nanocarbon material is a carbon nanotube.

4. The member according to any one of claims 1 to 3, wherein the matrix resin has a tensile strength of 12.5 MPa or more and the matrix resin has a tensile elongation of 200% or more.

5. The member according to claim 3, wherein the fiber length of the carbon nanotube is 100 to 1,000 µm.

6. A molded article, comprising: the member according to any one of claims 1 to 5, wherein the molded article is any one of a connecting tube, a tube end adaptor, and a gasket.

7. A composite molded article comprising: an electro-conductive portion comprising the member according to any one of claims 1 to 5; and a welding portion comprising a thermoplastic resin or thermoplastic resin composition comprising no electro-conductive material.

8. A method of joining the composite molded article according to claim 7, comprising welding the welding portions together.

9. A distribution mechanism for distributing a chemical liquid for manufacturing a semiconductor product, wherein at least a part of a surface, which is a surface of the distribution mechanism and which comes into contact with the chemical liquid, comprises the member according to any one of claims 1 to 5.

10. A tank for storing or stirring a chemical liquid for manufacturing a semiconductor product, wherein at least a part of a surface, which is a surface of the tank and which comes into contact with the chemical liquid of the tank, comprises the member according to any one of claims 1 to 5.

11. An apparatus comprising at least one of the distribution mechanism according to claim 9 and the tank according to claim 10.

12. A sheet for lining an inside of a pipe or a tank, wherein the sheet comprises the member according to any one of claims 1 to 5.

13. The sheet according to claim 12, comprising: an electro-conductive portion comprising the member according to any one of claims 1 to 5 and a welding portion including a thermoplastic resin or a thermoplastic resin composition containing no electro-conductive material,
wherein at least a portion of an outer edge of the sheet is the welding portion.

14. A pipe or a tank lined with the sheet according to claim 12 or 13.

15. The pipe or the tank according to claim 14, wherein the pipe or the tank is lined with the sheet according to claim 13, and
a plurality of the sheets comprise a lining layer joined by welding the welding portions together.

16. A method of distributing, stirring or storing a chemical liquid for manufacturing a semiconductor product, comprising using the pipe or the tank according to claim 14 or 15.

17. A storage tank for storing an insulating liquid, comprising a tank body, a pit, and a dripping tube inserted into the tank body,
wherein the pit is disposed inside the tank body,
the inserted tube is disposed such that one end of the dripping tube is positioned proximate to an opening of the pit, and
at least a part of a surface, which is a surface of at least one selected from the tank body, the pit and the dripping tube, and which comes into contact with the insulating liquid, comprises the member according to any one of claims 1 to 5.

18. The storage tank according to claim 17, wherein at least a part of a surface, which is a surface of the pit and which comes into contact with the chemical liquid, comprises the member according to any one of claims 1 to 5.

19. The storage tank according to claim 17 or 18, wherein the member is the member according to claim 3.

20. The storage tank according to any one of claims 17 to 19, wherein the chemical liquid is an organic solvent.

21. A method for storing an organic solvent for manufacturing a semiconductor product, wherein the organic solvent for manufacturing a semiconductor product is stored in the storage tank according to claim 20.

22. A method of manufacturing a semiconductor product, comprising using the organic solvent stored by using the method according to claim 21.
